# EUROPEAN PATENT SPECIFICATION

(11) **EP 1 897 690 B1**
(45) Date of publication and mention of the grant of the patent: **15.12.2010**
(21) Application number: 06764349.4
(22) Date of filing: 26.05.2006
(51) Int. Cl.: B41F 33/00

(54) **METHOD OF AUTOMATICALLY ADJUSTING THE PRINTING PRESSURE IN FLEXOGRAPHIC PRINTERS**
VERFAHREN ZUR AUTOMATISCHEN EINSTELLUNG DES DRUCKDRUCKES IN FLEXOGRAPHISCHEN DRUCKMASCHINEN
PROCEDE D'AJUSTEMENT AUTOMATIQUE DE LA PRESSION D'IMPRESSION DANS DES MACHINES D'IMPRESSION FLEXOGRAPHIQUE

(30) Priority: 10.06.2005 ES 200501398
(43) Date of publication of application: 12.03.2008
(73) Proprietor: COMEXI GROUP INDUSTRIES, S.A., 17457 Riudellots de la Selva (ES)
(72) Inventor: PUIG VILA, Jordi, Comexi SA, 17457 Riudellots de la Selva (Girona) (ES); SAHUN PERES, Jordi, Comexi SA, 17457 Riudellots de la Selva (ES); FERRER CADILLACH, Felip, 17457 Riudellots de la Selva (ES)
(74) Representative: Gislon, Gabriele
(86) International application number: PCT/ES2006/000296
(87) International publication number: WO 2006/131579

(56) References cited:
- EP-A- 0 993 947
- EP-A1- 0 993 947
- DE-A1- 2 060 000
- DE-A1- 4 413 735
- DE-A1- 4 427 967
- ES-A1- 2 159 481
- US-A- 4 667 596
- US-A- 5 056 430
- US-A- 5 448 949
- US-B2- 6 634 297

## Description

### Field of the Art

This invention generally relates to a method of automatically adjusting the printing pressure in flexographic printing machines by means of adjusting printing rollers and ink rollers belonging to a printing unit, and particularly to carrying out said adjustment according to the detection of the size of marks printed on a laminar material.

### Prior State of the Art

In the state of the art there are different systems and methods of controlling the operation of flexographic printing machines for the purpose of obtaining high quality printings. One of the most important and influential parameters in print quality is none other than the pressure exerted between the different rollers responsible for said print in the moment it is carried out.

A proposal aimed at controlling the mentioned printing pressure is described in patent document US-A-5967034, relating to a method and a device for detecting and controlling the printing pressure applied to a flexographic machine with at least one printing unit with ink supply means, an ink cylinder, a plate cylinder and a support cylinder, passing the laminar material to be printed between the support cylinder and the plate cylinder. The use of a pressure sensor included in the plate cylinder to control the pressure is proposed to detect the pressure exerted between it and one or the other two cylinders. Said pressure sensor emits signals indicative of the detected pressure, according to which the pressure is controlled by acting on one or more of said three cylinders.

One drawback of said proposal is the need of providing a recess to house the mentioned sensor on the surface of the plate cylinder, which due to being located in such place will be subjected, along with the associated wiring, to considerable stress and/or mechanical demands, since the cylinder is in continuous movement. Another disadvantage is that detecting the pressure of the plate cylinder is not a direct measurement of the quality of the printed image, since other factors in addition to pressure (such as a poor calibration or misfit of the cylinders) can affect said print quality.

A proposal which does perform a direct measurement of the print quality by means of analyzing part of the printed image is described in patent document US-A-6634297, relating to a device and a process for adjusting the printed image in a flexographic printing machine by means of moving one or more of the cylinders cooperating to print, i.e. the ink roller, the plate and the support roller. The proposed device includes at least one camera to scan the image by means of applying the claimed method once said image is printed on the laminar material, and sending the obtained images to a control and regulating unit, which analyzes the received images and compares them with predetermined recorded values indicative of a good printing, said values relating for example to contrast, boundaries or reflected light intensity in the images. If the comparison provides an unsatisfactory result, the control unit generates actuation signals to move one or more of said cylinders until the exerted pressure produces a good print quality.

Although said background document does propose an automatic and direct method of verifying the print quality, the necessary analysis is complex, if the quality is determined by means of a comparison of contrasts or of boundaries or of the reflected light intensity, since a large amount of data is necessary to carry out said comparisons, both in relation to the captured images and regarding the recorded information to be used as a reference. In addition, it does not propose analyzing only a small portion of the image or reference marks that do not belong to the image to be obtained; it can therefore be deduced that it is necessary to print the entire image before applying the proposed method, whereby the aforementioned relating to the large amount of data to be handled becomes even clearer. This also results in the need to use an electronic system with a high processing capacity in addition to one or more cameras. Another drawback is that the image must be captured downstream of the printing area, which comprises a significant waste of print material.

These objects are achieved by a method according to claim 1. A measurement of the print quality by means of printed marks is known from document DE 2060000.

### Explanation of the Invention

It is necessary to provide an alternative to the state of the art by means of providing a method which makes it possible to control the pressure of the rollers of a flexographic machine so as to assure good print quality, but which does not suffer the drawbacks like the aforementioned background documents, which takes direct measurements of printed images in a simpler manner than in the last mentioned background document to detect the print quality, saves wastes of printed material, and it also provides a simpler analysis than the analysis carried out in the mentioned background document, which involves having to handle a much smaller amount of data than those necessary to carry out the method of the mentioned background document relating both to the captured images and to the recorded reference values indicative of good print quality.

This invention relates to a method of automatically adjusting the printing pressure in flexographic printing machines with a rotating support drum on which there is supported a laminar material to be printed and a series of printing rollers each associated to a respective ink roller, belonging to respective printing units, arranged around said support drum and spaced along its perimeter.

Like the process of patent document US-A-6634297, a proposed and not claimed method comprises the following three steps:
a) detecting at least one image printed with one or more of said printing rollers and obtaining values representative of the quality of said image resulting from at least said detection,
b) comparing said representative values with predetermined and recorded values for said image, and indicative of good quality, and
c) if said comparison gives as a result a discrepancy or deviation indicating that the quality of said detected image is not good, compensating for said discrepancy by means of adjusting, increasing or decreasing, the pressure of said printing roller and of the ink roller to which it is associated.

Unlike of said background document representative of the state of the art, the proposed method comprises detecting an image representative of a mark, and not an entire main image or motif as occurred in the background document, and subsequently comparing representative values thereof with other predetermined and stored values for said mark and indicative of good printing.

In other words, by means of applying the proposed method it is not necessary to analyze the central images to be reproduced on the laminar material, but rather only the marks printed at the same time as said images or without having to print such images, whereby the printing pressure analysis can be carried out by printing only said marks.

Analyzing the mentioned marks and not the main images to be printed already means that the amount of data to be handled for said analysis is much lesser than that used by the method described above representative of the state of the art. **

Said amount of data to be handled is even much less due to the fact that unlike the mentioned background document, said values representative of the quality of at least said detected mark are not indicative of parameters such as the contrast, the boundaries, or the reflected light intensity, which require a large amount of data for their analysis, but rather they are indicative of the size of the mark, and to obtain this it is sufficient to acquire a small amount of data, for which the method comprises carrying out said step a) by means of the following sub-steps:
a.1) detecting the start and end of said mark by means of a photoelectric sensor as the material on which it is printed is moved, a.2) detecting the angular positions of the support drum and/or of the printing roller that has printed said mark and/or of the remaining printing rollers, in the moments in which the start and the end of said mark have been detected, respectively, and
a.3) establishing said size as being equal to the circumferential section between said two angular positions detected.

Once the size of the detected mark has been discovered, the method comprises carrying out the comparison of step b) for predetermined and recorded values for said mark and indicative of good print quality, also relating to the size of the mark when such mark has been printed with a print quality rated as good.

The proposed method is preferably applied to the detection and comparison of several marks, at least one per plate roller, to finally adjust rollers of several or all of the printing units to be used for the printing operation to be carried out.

For the purpose of compensating for a possible loss of parallelism between the rollers causing a non-uniform printing pressure, the proposed method comprises detecting and comparing, for one embodiment, for each plate roller, two or more marks arranged in different areas of the roller, generally at least one at each end, and one or more in a central area of the roller to obtain greater precision.

Using a photoelectric sensor instead of a camera also represents a simplification to be considered, especially for an embodiment in which said sensor is the same that is used for a rollers register prior step, performing a dual function, in this case not needing the installation of additional elements in the flexographic printing machine.

The photoelectric sensor can be located immediately next to the last printing unit, whereby reducing the waste of printed material used during the adjustments

In relation to the marks to be detected, the marks can be printed specifically to carry out the proposed method, or the register marks used for the mentioned rollers register prior step can be used, whereby the discussed simplification is even greater insofar as not having to add additional elements to the machine.

### Brief Description of the Drawings

The foregoing and other features will be better understood from the following detailed description of several embodiments with reference to the attached drawings, in which:
Figure 1 is an elevational schematic view of part of a flexographic printing machine in which the most relevant elements to be taken into account by the method proposed by this invention can be seen,
Figure 2 is a plan schematic view of a portion of printed material in which a series of marks printed on one of its sides is shown for one embodiment,
Figure 3 is a plan schematic view of a portion of printed material similar to that of Figure 2 but for another embodiment for which there are marks printed on both sides, widthwise, of the printed material,
Figure 4 shows a schematic plan view of two marks, one printed with good quality and the other one poorly printed due to insufficient pressure,
Figure 5 also shows a schematic plan view of a series of marks with a series of indicative measurements, for another embodiment, and
Figure 6 and Figures 7a to 7d show a variant of carrying out the method of the invention which will be explained below.

### Detailed Description of Some Embodiments

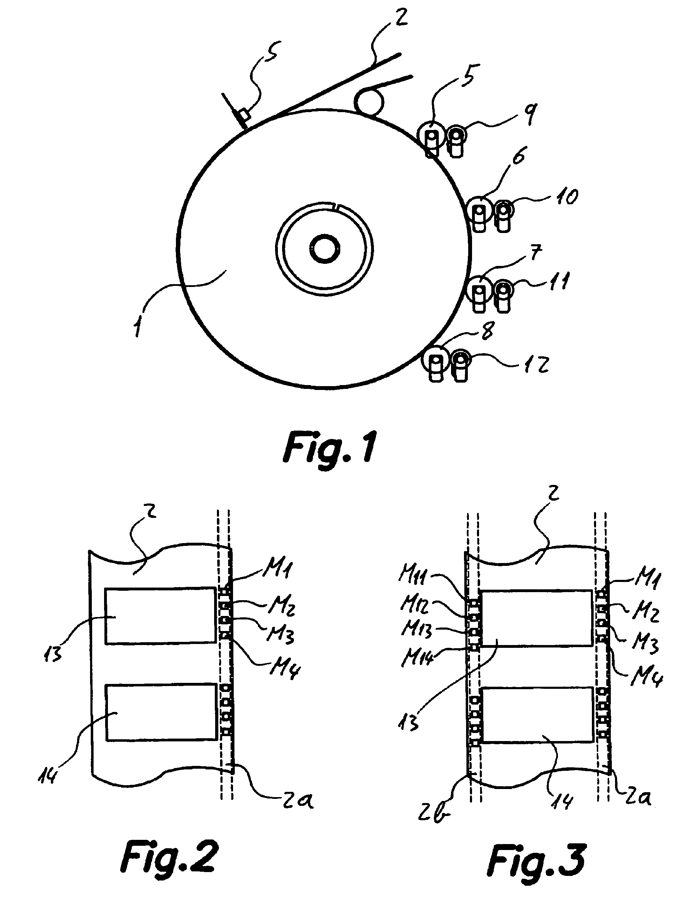

This invention relates to a method of automatically adjusting the printing pressure in flexographic printing machines (such as the one schematically shown in Figure 1) with a rotating support drum 1 on which there is supported a laminar material 2 to be printed and a series of printing rollers 5, 6, 7, 8 each associated to a respective ink roller 9, 10, 11, 12, belonging to respective printing units, arranged around said support drum 1 and spaced along its perimeter (Figure 1 only shows one sector, although there are generally printing units on both sides of the support drum 1).

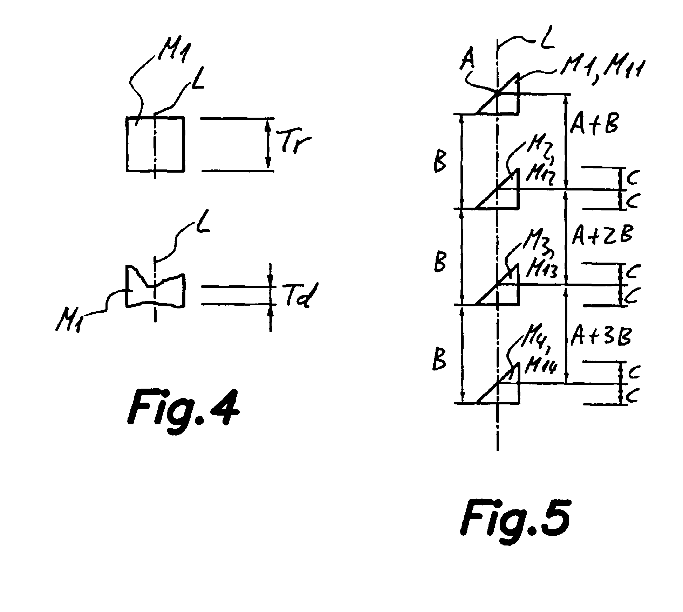

The method is of the type comprising the following steps:
a) detecting a mark M1 (see Figures 2 to 5) printed with at least one 5 of said printing rollers 5, 6, 7, 8 and obtaining values representative of the size Td (see Figure 4) of said detected mark M1 by carrying out the next sub-steps:
   a.1) detecting the start and the end of said mark M1 by means of a photoelectric sensor S (see Figure 1) as the material 2 on which it is printed is moved,
   a.2) detecting the angular positions of the support drum 1 and/or of the printing roller 5 that has printed said mark M1 and/or of the remaining printing rollers 6, 7, 8, in the moments in which the start and the end of said mark M1 have been detected, respectively,
   a.3) establishing said size Td as being equal to the circumferential section between said two angular positions detected,
b) comparing said values representative of the detected size Td with predetermined and recorded values for said mark M1, which are indicative of good quality, said predetermined values relating to the size Tr of said mark M1 when it has been printed with good print quality, and
c) if said comparison gives as a result a discrepancy or deviation indicating that the quality of said detected image is not good, i.e. if the detected size Td is not equal to size Tr, or reference size, the method comprises compensating for said discrepancy by means of adjusting the pressure of at least said printing roller 5 that has printed said mark M1 and of the ink roller 9 to which it is associated.

Even though for the embodiment shown in Figure 1 the photoelectric sensor S responsible for carrying out the mentioned detection of step a.1) is arranged on the support drum 1, so the detection occurs while the laminar material 2 is arranged on the support drum 1 and passes under said photoelectric sensor S, for other embodiments the detection of step a.1) can be carried out in other positions, such as for the positions in which the portion of the laminar material 2 having the mark M1 printed thereon has already left the support drum 1 for example, to which end the photoelectric sensor S would be arranged in another location of the flexographic machine different from the position shown in Figure 1.

In Figure 4 the difference between a mark M1 printed with good quality, with a size equal to the reference size Tr, and a mark M1 printed with poor quality due to insufficient printing pressure, the size Td of which is by no means equal to the reference size Td can be clearly seen.

In said Figure 4 and in Figure 5, a line L or reading line is seen which represents the area of actuation of the photoelectric sensor S, i.e. where it takes the measurements of the mark or marks.

For a preferred embodiment the proposed method comprises carrying out all the steps described above, i.e. the detection, the comparison and the final adjustment, for several marks M1, M2, M3, M4, M11, M12, M13, M14, printed by several or by all the mentioned printing rollers 5, 6, 7, 8, in a sequential, roller to roller manner, finally adjusting in said step c) the printing rollers 5, 6, 7, 8 used and their corresponding ink rollers 9, 10, 11, 12.

The method is valid both for being applied when each printing roller 5, 6, 7, 8 prints only one mark M1, M2, M3, M4, as shown in the embodiment shown in Figure 2, to which end the marks M1, M2, M3, M4 are printed close to a side edge 2a of the laminar material 2, and for a preferred embodiment shown in Figure 3, when each printing roller 5, 6, 7, 8 prints two marks M1-M11, M2-M12, M3-M13, M4-M14, each row of marks M1-M2-M3-M4, M11-M12-M13-M14 preferably being located close to each of the side edges 2a, 2b of the laminar material 2, as can be seen in Figure 3, the central area being used to print the different main printing motifs 13, 14.

The fact that each roller prints two marks M1-M11, M2-M12, M3-M13, M4-M14 arranged in different areas of the printing roller 5, 6, 7, 8, generally one at each end, is for the purpose of compensating for a possible loss of parallelism between the rollers causing a non-uniform printing pressure.

For other embodiments that are not shown, the proposed method comprises detecting and comparing, for each printing or plate roller 5, 6, 7, 8, more than two marks per roller for the purpose of obtaining greater precision, one or more of said marks being arranged in a central area of each printing roller 5, 6, 7, 8.

Each pair of marks M1-M11, M2-M12, M3-M13, M4-M14 printed by one and the same printing roller 5, 6, 7, 8 are located in two spaced areas; for one embodiment they are spaced widthwise on said laminar material 2, or for the embodiment shown in Figure 3, they are spaced widthwise and lengthwise on said laminar material 2.

For one embodiment the method comprises detecting each pair of marks M1-M11, M2-M12, M3-M13, M4-M14 by means of the transversal movement of a single photoelectric sensor S above or beneath them.

For another embodiment the method comprises detecting each pair of marks M1-M11, M2-M12, M3-M13, M4-M14 simultaneously by means of two respective photoelectric sensors above or beneath each of them, acting in parallel. For this case detection is possible for one or for both embodiments discussed above, i.e. the embodiment referring to the case in which each pair of marks M1-M11, M2-M12, M3-M13, M4-M14 are spaced from one another only widthwise on the laminar material 2 (embodiment not shown) and the embodiment referring to the case in which they are spaced from one another both widthwise and lengthwise (embodiment shown in Figure 3).

The fact that the mentioned detection is possible for one or both of said embodiments depends on the capacity and type of electronic system used to carry out the proposed method and/or of the number of rollers used to carry out said sub-steps a.2) and a.3).

Specifically, if sub-steps a.2 and a.3) are carried out for a single roller, such as printing roller 5, and the electronic system used for reading the angular positions of said roller 5 and the subsequent processing thereof is also responsible for acquiring the reading signals from both photoelectric sensors and their subsequent comparison with the detected angular positions, and to that end it must stop scanning the angular positions of the roller 5, as conventionally occurs in these types of machines, if the marks of each pair of marks, for example M1-M11, are not staggered, i.e. spaced longitudinally also, both signals would interfere with one another and would not allow the four angular positions of the printing roller 5 necessary for discovering the size of both marks M1, M11 to be detected.

If in contrast both marks M1, M11 are longitudinally spaced as can be seen in Figure 3, the detection of the start of one of the marks M11 occurring once the end of the other mark M1 has been detected, it is possible to carry out the proposed method with the conventional electronic system discussed above and to obtain the size of the marks in relation to a single roller (printing roller 5 in the example), the detections of the size of both marks M1, M11 being carried out sequentially, first that of one of the marks M1, by means of detecting the start and end of the mark M1 and the two associated angular positions of the printing roller 5, and subsequently that of the other mark M11, of the pair of marks M1-M11, by means of detecting the start and end of the mark M11 and the two associated angular positions of the printing roller 5.

The previous limitations, i.e. not being able to establish the size of the marks of each pair of marks M1-M11, M2-M12, M3-M13, M4-M14 simultaneously and having to longitudinally space the respective members of each of them, can be overcome for another embodiment of the proposed method to which end it comprises carrying out said detection of said step a.2) for detecting the angular positions of each printing roller 5, 6, 7, 8 that has printed each pair of marks M1-M11, M2-M12, M3-M13, M4-M14 and of its respective associated ink roller 9, 10, 11, 12, and establishing in said step a.3) the size Td of one of the marks M1, M2, M3, M4 of each pair as being equal to the circumferential section between the two angular positions of the printing roller 5, 6, 7, 8 that has printed it and the size of the other mark M11, M12, M13, M14 as being equal to the circumferential section between the two angular positions of its respective ink roller 9, 10, 11, 12, or vice versa.

In other words, for this last embodiment when the electronic system acquires the reading signals from one of the photoelectric sensors referring to one of the marks, for example M1, the scanning of the angular positions of one of the rollers, for example printing roller 5, is stopped, and when the reading signals are acquired from the other photoelectric sensor referring to the other mark M11 of the pair M1-M11, the scanning of the angular positions of the roller used as a reference to establish the size Td thereof, for example anilox roller 9, is stopped.

Conventional electronic systems of this type of machines have the aforementioned limitations, but they are able to treat the signals coming from two angular position detectors (encoders) simultaneously and separately, so it is possible to carry out the proposed method for the embodiment described in the two previous paragraphs, with one of such conventional electronic systems without needing to longitudinally space the marks of each pair of marks M1-M11, M2-M12, M3-M13, M4-M14 lengthwise on the laminar material 2.

Obviously for an electronic system that is able to carry out all detections in parallel, both the detections carried out by the photoelectric sensors and the detections carried out by the angular position detectors, and to process them simultaneously, the aforementioned limitations would not exist, but this is not the case in conventional electronic systems existing in most flexographic machines.

As seen in Figure 5, the proposed method comprises for one embodiment, before said step a), adjusting the angular positions of the printing rollers 5, 6, 7, 8 to be used so that they print their respective marks M1-M11, M2-M12, M3-M13, M4-M14 spaced in relation to the marks of each contiguous roller by a predetermined space B, in order to, after detecting a first mark M1, M11 or reference mark located at a certain point A, carry out or accept the sequential detection of the remaining marks M2, M12; M3, M13; M4, M14 of the remaining printing rollers 6, 7, 8 only when said predetermined space B or a multiple 2B, 3B thereof has gone by, taking into account certain tolerances.

The method comprises defining said tolerances by means of a series of sampling windows C indicating the areas where a mark can be detected.

Carrying out the proposed method is thereby automated, making it possible to reduce the time and meters of wasted laminar material 2 since by detecting the mentioned reference mark M1, M11, it is possible to automatically determine, by means of the mentioned sampling windows C, where the other marks M2, M12; M3, M13; M4, M14 can be found and thus discriminating possible interference signals.

Therefore, once point A, which is used as a reference, is determined, it is possible to automatically determine where the remaining marks are located given that they are always successively located a distance B with a tolerance or window C.

It should be noted that in Figure 5 the marks shown are triangles, whereas in the remaining figures (2 to 4) they are squares. This is for the purpose of showing that the detection of the start of a mark does not necessarily occur when the mark begins, but rather when the mark to be detected crosses with the reading line L of the photoelectric sensor S.

Obviously for the case in which they are rectangles, the point where said crossing occurs coincides with the start of the mark.

The proposed method is valid for said two shapes of marks as well as for any other shape that a person skilled in the art considers appropriate.

Due to the fact that each of the printing rollers 5, 6, 7, 8 of a flexographic machine of the type used by the proposed method generally prints with a different color, the method comprises using different colored marks, at least one color per printing roller 5, 6, 7, 8, and carrying out the mentioned step a.1) for detecting said different colored marks once printed by means of a chromatic sensor S.

Step d) for adjusting pressure can be carried out in different manners, preferably by carrying out successive approaches, by forwards and backwards movements, of each of the two rollers 5-9, 6-10, 7-11, 8-12 involved in printing each of said marks M1, M11, M2, M12, M3, M13, M4, M14, while at the same time comparing the measurement or size Td of the resulting printed mark with the theoretical size Tr thereof.

The minimum pressure point of each printing or plate roller 5, 6, 7, 8, and of each ink or anilox roller 9, 10, 11, 12, assuring correct printing of the analyzed mark is thereby determined.

Due to the fact that when a mark M1, M11, M2, M12, M3, M13, M4, M14 printed with insufficient pressure, i.e. with a size Td different from the reference size Tr, is detected it is not yet known if the poor printing is because of a lack of pressure of the ink roller 9, 10, 11, 12 or of the printing roller 5, 6, 7, 8, this must be determined by analyzing the result of the print upon increasing the pressure of each of them separately, or even upon increasing the pressure simultaneously.

Once the mark M1, M11, M2, M12, M3, M13, M4, M14 has been printed with the correct measurement, the minimum pressure point of each roller assuring the printing of the mark M1, M11, M2, M12, M3, M13, M4, M14 with the correct measurement must be determined, i.e. the pressure of each plate roller 5, 6, 7, 8 is successively decreased and the measurement of the size Td of the mark M1, M11, M2, M12, M3, M13, M4, M14 resulting from this pressure decrease is taken until a reduction thereof is detected, then the minimum pressure point (known as kiss point) for each plate roller 5, 6, 7, 8 will be the point immediately before the point of that poor print, after which the original size of the mark M1, M11, M2, M12, M3, M13, M4, M14 is recovered by establishing the pressure of the plate roller 5, 6, 7, 8 that has printed it at that determined pressure point, and then the same operation is used to determine the minimum pressure point for its respective anilox 9, 10, 11, 12, by eliminating pressure therefrom and comparing the measurements of the resulting printed marks M1, M11, M2, M12, M3, M13, M4, M14 until obtaining optimal pressure for each pair of rollers 5-9, 6-10, 7-11, 8-12. The sequence can be altered, first finding the optimal adjustment of each ink roller 9, 10, 11, 12 and then that of each printing roller 5, 6, 7, 8

From this minimum pressure point, excess pressure can be added to assure that the printing is not only correct in the area of the marks M1, M11, M2, M12, M3, M13, M4, M14, but rather it can assure that the rest of the motif 13, 14 of each plate roller will also be printed correctly.

One of the possible embodiments of the proposed method comprises carrying out said step c) by means of actuating linear motors adapted to move the printing rollers 5, 6, 7, 8 and the ink rollers 9, 10, 11, 12 towards the support drum 1 and in opposite directions through respective supports.

For other embodiments it is possible to use other types of motors instead of said linear motors, such as stepper motors or servomotors.

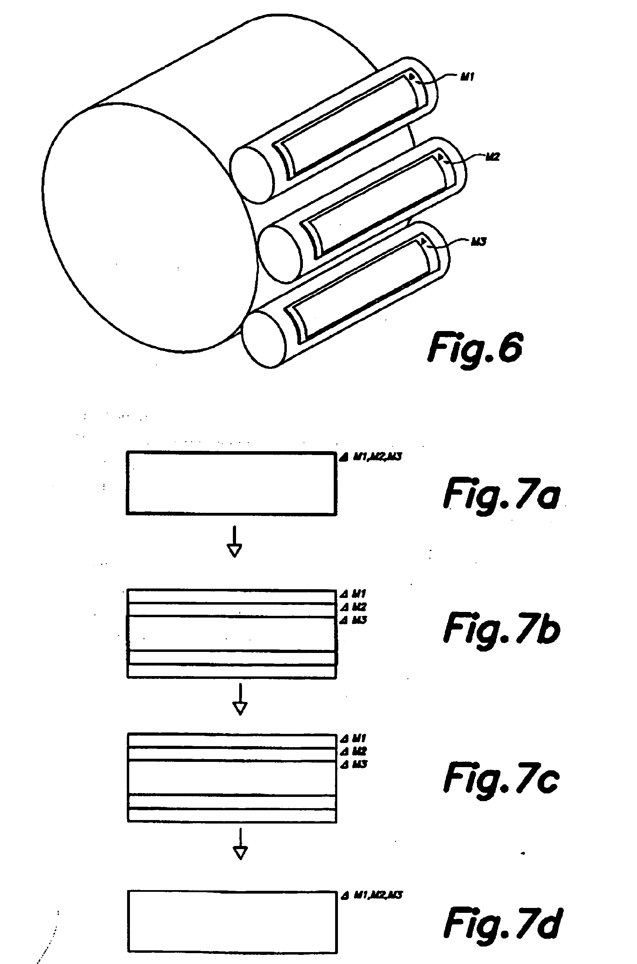

Figure 6 and Figures 7a to 7d show a variant for carrying out the method of the invention in which it has been provided that all the steps are carried out for several marks M1, M2, M3, M4 printed by several or all of the mentioned printing rollers 5, 6, 7, 8, with the particularity that each of the marks to be printed is located in the same position on the printing plate of the corresponding roller, such that in a first printing the marks would be overlapping (Figure 7a) with a certain margin for error. In this case, the marks are first separated (Figure 7b) by means of a predetermined angular rotation (taking into account the mentioned overlapping error) of the corresponding rollers, such that when the marks M1, M2, M3 are printed they are separated (Figure 7c), steps a.1) to a.3) then being carried out, and finally adjusting in said step c) the printing rollers 5, 6, 7, 8 used and their corresponding ink rollers 9, 10, 11, 12.

By means of this variant and taking into account that upon separating or displacing the marks a predetermined space, each mark is already known or identified in relation to its printing roller, the mentioned steps a.1) to a.3) are carried out by means of a continuous reading (the photoelectric sensor sends a pulse train) for all the printing rollers 5, 6, 7, 8 used.

Finally, once the pressure of each roller is adjusted the printing rollers 5, 6, 7, 8 are repositioned in their initial angular orientation, whereby the marks would be printed perfectly overlapping one another (Figure 7d).

A person skilled in the art may introduce changes and modifications in the embodiments described without departing from the scope of the invention as it is defined in the attached claims.

## Claims

1. A method of automatically adjusting the printing pressure in flexographic printing machines with a rotating support drum (1), on which there is dynamically supported a laminar material (2) to be printed and a series of printing rollers (5, 6, 7, 8) carrying a printing plate, each associated to a respective ink roller (9, 10, 11, 12), belonging to respective printing units, arranged around said support drum (1) and spaced along its perimeter, each of said printing rollers (5, 6, 7 , 8) comprising at least a corresponding mark (M1, M2, M3, M4) to be printed on said laminar material (2), **characterized in that** each of the marks to be printed (M1, M2, M3, M4) is located in the same position in the corresponding printing plate so that in a first printing step the marks are overlapping with some minor error, and **in that** said method comprises the following steps:
a) performing a predetermined angular rotation of several or all the corresponding printing rollers (5, 6, 7, 8);
b) printing on said laminar material (2) the marks (M1, M2, M3, M4) of said printing rollers (5, 6, 7, 8) having suffered an angular rotation, so that when the marks (M1, M2, M3, M4) are printed they appear separated;
c) detecting at least one mark (M1, M2, M3, M4) printed with at least one (5) of said printing rollers (5, 6, 7, 8) and obtaining values representative of the quality of said image resulting from at least said detection;
d) comparing said representative values with predetermined and recorded values for said mark (M1, M2, M3, M4), and indicative of good quality, and
e) if said comparison gives as a result a discrepancy or deviation indicating that the quality of said detected mark (M1, M2, M3, M4) is not good, compensating for said discrepancy by means of adjusting the pressure of at least said printing roller (5) that has printed said image and of the ink roller (9) to which it is associated.

2. A method according to claim 1, **characterized in that** said steps a) to e) are carried out through a continuous reading for all the printing rollers (5, 6, 7, 8) used.

3. A method according to claim 2, **characterized in that** once the pressure of each roller is adjusted the printing rollers (5, 6, 7, 8) are repositioned in their initial angular orientation.

4. A method according to claim 1, **characterized in that** said marks (M1, M2, M3, M4) each of them located in the same position in the corresponding printing plate are used in a previous step of register adjusting.

## Patentansprüche

1. Verfahren zum automatischen Einstellen der Druckspannung bei Flexodruckmaschinen mit einer drehbaren Stütztrommel (1), auf welcher ein zu bedruckendes Schichtmaterial (2) dynamisch gestützt wird, sowie eine Reihe an Druckwalzen (5, 6, 7, 8), welche eine Druckplatte tragen und von denen jede mit einer jeweiligen Farbwalze (9, 10, 11, 12) verbunden ist, die jeweiligen Druckwerken angehören, die um die genannte Stütztrommel (1) herum angeordnet und entlang ihres Umfangs beabstandet sind, wobei jede der genannten Druckwalzen (5, 6, 7, 8) zumindest eine entsprechende, auf das genannte Schichtmaterial (2) zu druckende Markierung (M1, M2, M3, M4) umfasst, **dadurch gekennzeichnet, dass** jede der zu druckenden Markierungen (M1, M2, M3, M4) an derselben Position in der entsprechenden Druckplatte gelegen ist, so dass in einem ersten Druckschritt sich die Markierungen mit einem gewissen geringfügigen Fehler überlappen, und dass das genannte Verfahren die folgenden Schritte umfasst:
a) Durchführen einer vorbestimmten Winkeldrehung von mehreren oder allen entsprechenden Druckwalzen (5, 6, 7, 8);
b) Bedrucken des genannten Schichtmaterials (2) mit den Markierungen (M1, M2, M3, M4) der genannten Druckwalzen (5, 6, 7, 8), die eine Winkeldrehung erlitten haben, so dass die Markierungen (M1, M2, M3, M4), wenn sie gedruckt werden, getrennt erscheinen;
c) Erfassen zumindest einer Markierung (M1, M2, M3, M4), die mit zumindest einer (5) der genannten Druckwalzen (5, 6, 7, 8) gedruckt wird, und Erhalten von Werten, die für die Qualität des genannten Bildes stehen, das von zumindest dem genannten Erfassen resultiert;
d) Vergleichen der genannten repräsentativen Werte mit vorbestimmten und aufgezeichneten Werten für die genannte Markierung (M1, M2, M3, M4), und die auf eine gute Qualität schließen lassen, und
e) wenn das genannte Vergleichen eine Diskrepanz oder Abweichung ergibt, welche darauf schließen lässt, dass die Qualität der genannten erfassten Markierung (M1, M2, M3, M4) schlecht ist, Ausgleichen der genannten Diskrepanz durch Einstellen der Spannung von zumindest der genannten Druckwalze (5), die das genannte Bild gedruckt hat, und der Farbwalze (9), mit welcher diese verbunden ist.

2. Verfahren nach Anspruch 1, **dadurch gekennzeichnet, dass** die genannten Schritte a) bis e) durch ein durchgehendes Lesen für alle verwendeten Druckwalzen (5, 6, 7, 8) durchgeführt werden.

3. Verfahren nach Anspruch 2, **dadurch gekennzeichnet, dass** nach dem Einstellen der Spannung jeder Walze die Druckwalzen (5, 6, 7, 8) in ihre anfängliche Winkelausrichtung zurückgesetzt werden.

4. Verfahren nach Anspruch 1, **dadurch gekennzeichnet, dass** die genannten Markierungen (M1, M2, M3, M4), von denen jede in derselben Position in der entsprechenden Druckplatte gelegen ist, in einem vorhergehenden Registereinstellschritt verwendet werden.

## Revendications

1. Une méthode pour régler automatiquement la pression d'impression dans les machines d'impression flexographique ayant un tambour d'appui tournant (1), sur lequel se trouve dynamiquement soutenu un matériau en feuilles (2) à imprimer et une série de rouleaux d'impression (5,6,7,8) portant une planche d'impression, chacun étant relié à un rouleau encreur respectif (9, 10, 11, 12) appartenant à des unités d'impression respectives, aménagées autour de ce tambour d'appui (1) et espacées le long de son périmètre, chacun de ces rouleaux encreurs (5,6,7,8) comportant au moins une marque correspondante (M1, M2, M3, M4) à imprimer sur ce matériau en feuilles (2) **caractérisée en ce que** chacune des marques à imprimer (M1, M2, M3, M4) est située dans la même position sur la planche d'impression correspondante de sorte que dans une première étape, les marques se chevauchent avec une certaine erreur mineure et **en ce que** cette méthode comporte les étapes suivantes:
a) effectuer une rotation angulaire prédéterminée de plusieurs ou de tous les rouleaux d'impression (5, 6, 7,8) ;
b) imprimer sur ce matériau en feuilles (2) les marques (M1, M2, M3, M4) de ces rouleaux d'impression (5, 6, 7,8) ayant subi une rotation angulaire, de sorte que lorsque les marques (M1, M2, M3, M4) sont imprimées elles apparaissent séparées ;
c) détecter au moins une marque (M1, M2, M3, M4) imprimée avec au moins un (5) de ces rouleaux d'impression (5, 6, 7,8) et obtenir des valeurs représentatives de la qualité de cette image résultant d'au moins cette détection ;
d) comparer ces valeurs représentatives avec des valeurs prédéterminées et enregistrées pour cette marque (M1, M2, M3, M4) et indicatives d'une bonne qualité, et
e) si cette comparaison donne pour résultat une différence ou déviation indiquant que la qualité de cette marque (M1, M2, M3, M4) n'est pas bonne, compenser cette différence en réglant la pression d'au moins ce rouleau d'impression (5) ayant imprimé cette image et du rouleau encreur (9) auquel il est relié.

2. Une méthode conformément à la revendication 1, **caractérisée en ce que** ces étapes a) à e) sont effectuées à travers la lecture continue de tous les rouleaux d'impression (5, 6, 7, 8) utilisés.

3. Une méthode conformément à la revendication 2, **caractérisée en ce que** dès que la pression de chaque rouleau est réglée, les rouleaux d'impression (5, 6,7, 8) sont remis en place à leur orientation angulaire initiale.

4. Une méthode conformément à la revendication 1, **caractérisée en ce que** ces marques (M1, M2, M3, M4), chacune située dans la même position sur la planche d'impression correspondante, sont utilisées dans une étape précédente de réglage de l'enregistrement.
